# Europäisches Patentamt
# European Patent Office
# Office européen des brevets

(11) Publication number: **0 052 461**
**B1**

(12) **EUROPEAN PATENT SPECIFICATION**

(45) Date of publication of patent specification: **13.08.86**

(21) Application number: **81305227.1**

(22) Date of filing: **03.11.81**

(51) Int. Cl.⁴: **F 01 C 21/00**

(54) Scroll-type fluid displacement apparatus with means for counteracting centrifugal forces.

(30) Priority: **10.11.80 JP 161094/80 u**

(43) Date of publication of application:
**26.05.82 Bulletin 82/21**

(45) Publication of the grant of the patent:
**13.08.86 Bulletin 86/33**

(84) Designated Contracting States:
**DE FR GB IT SE**

(56) References cited:
**EP-A-0 037 658**
**EP-A-0 052 234**
**GB-A- 486 192**
**US-A-1 906 142**
**US-A-3 874 827**
**US-A-3 986 799**
**US-A-4 082 484**

(73) Proprietor: **SANDEN CORPORATION**
**20 Kotobuki-cho**
**Isesaki-shi Gunma-ken (JP)**

(72) Inventor: **Iimori, Takayuki**
**No. 7, 2 Miyabisou 4-10, 2-chome, Tsukiji**
**Kamifukuoka-shi Saitama-ken (JP)**

(74) Representative: **Pritchard, Colin Hubert et al**
**Mathys & Squire 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to scroll-type fluid displacement apparatus.

There are several types of fluid displacement apparatus which utilize an orbiting piston or fluid displacing member. One apparatus, disclosed in US—A—1,906,142 to John Ekelof, is a rotary machine provided with an annular and eccentrically movable piston adapted to act within an annular cylinder provided with a radial transverse wall. One end wall of the cylinder is fixedly mounted and the other wall consists of a cover-disc connected to the annular piston, which is driven by a crank shaft. Another prior art apparatus is shown in US—A—801,182 and US—A—3,560,119. Thus, US—A—801,182 discloses a scroll type apparatus including two scroll members each having a circular end plate and a spiroidal or involute spiral element. The scroll members are maintained angularly and radially offset so that both spiral elements interfit at a plurality of line contacts between their spiral curved surfaces to thereby seal off and define at least one pair of fluid pockets. The relative orbital motion of these scroll members shifts the line contact along the spiral curved surfaces and, therefore, changes the volume in the fluid pockets. The volume of the fluid pockets increases or decreases dependent on the direction of the orbital motion. Therefore, the scroll type fluid displacement apparatus is applicable to compress, expand or pump fluids. In comparison with conventional compressors of the piston type, a scroll type compressor has certain advantages such as fewer number of parts, continuous compression of fluid. However, there have been several problems, primarily sealing of the fluid pockets, wearing of the spiral elements, and outlet and inlet porting.

Although various improvements in fluid displacement apparatus have been disclosed in many patents such improvements have not sufficiently resolved these and other problems.

In particular, it is desirable that the sealing force at the line contacts be sufficiently maintained in a scroll type fluid displacement apparatus, because the fluid pockets are defined by the line contacts between the interfitting spiral elements and the line contacts shift along the surface of the spiral elements during the orbital motion of scroll member, thereby to move the fluid pockets to the center of the spiral elements with a consequent reduction in volume and compression of the fluid in the pockets. On the other hand, if the contact force between the spiral elements becomes too large, wear of the spiral element surfaces increases. In view of this, the contact forces between the spiral elements must be suitably maintained. However, these contact forces can not be precisely maintained because of dimensional errors in manufacturing the elements. To decrease the dimensional errors of the spiral elements during manufacture, would unduly complicate the manufacture of the elements.

US—A—3 986 799 discloses a scroll type fluid displacement apparatus wherein means are provided for dealing with problems of sealing and wear. The apparatus has a driving mechanism incorporating counterbalancing means for overcoming a portion of the centrifugal force acting on an orbiting scroll member. This counterbalancing means consists of a single member having a balanceweight portion and a linkage portion for attaching the balanceweight portion to a shaft extending from the orbiting scroll member. The mass of the balanceweight portion is sufficient to overcome a portion of the centrifugal force acting upon the stationary scroll member. However, the remainder of the centrifugal force serves to achieve tangential sealing between the scrolls of the orbiting and stationary scroll members, and hence causes wear of the scrolls.

GB—A—486 192 also discloses a rotary apparatus such as a pump or compressor in which various means are provided for continually urging the piston against the wall of the body member. There is, however, no mention of any cancellation of the centrifugal forces arising from the orbiting motion of the piston and the piston and the body member are again subject to wear.

In EP—A—37658 a bushing or linkage member for coupling an orbiting scroll member to a driving mechanism has a linkage portion and a balanceweight portion for cancelling centrifugal forces arising from the orbital motion of the orbiting scroll member and the bushing. However, the balanceweight portion is formed integrally with the linkage portion. This means the linkage member has a complex shape and is difficult to manufacture. EP—A—52234 discloses an apparatus similar to that disclosed in EP—A—37658.

The problem of sealing the fluid pockets is not completely resolved by the above mentioned patents.

It is a primary object of this invention to provide a fluid displacement apparatus which has excellent sealing of fluid pockets and prevents wearing of the piston elements surfaces.

It is another object of this invention to provide a fluid displacement apparatus which is simple to construct and to produce.

According to the present invention there is provided a scroll-type fluid displacement apparatus including a housing, a fixed scroll member fixedly disposed within said housing and having first wrap means, an orbiting scroll member having an end plate means from which second wrap means extend, said first and second wrap means interfitting at an angular offset to make a plurality of line contacts to define at least one pair of sealed off fluid pockets, a driving mechanism which is operatively connected to said orbiting scroll member to effect the orbital motion of the orbiting scroll member, the driving means including a drive shaft rotatably supported by said housing, a drive pin eccentrically disposed with respect to the axis of the drive shaft at an inner end of said drive shaft, an extension extending from a side of said end plate opposite to a side surface from which said second wrap means extends, and a member having a linkage portion operatively connected to said extension and a counterweight portion, said linkage portion having an eccentric hole for rotatably receiving said drive pin, and a rotation preventing means for preventing the rotation of said orbiting scroll member during the orbital motion of said orbiting scroll member, whereby said fluid pockets change volume by the orbital motion of said orbiting scroll member, characterised in that said counterweight portion is made of a single body separate from said linkage portion, the counterweight portion is formed of an attachment portion for attachment to said separate linkage portion and a balanceweight portion, said counterweight portion is attached at said attachment portion to said linkage portion by fastening means, said balanceweight portion has a mass for generating a centrifugal force of a magnitude to fully cancel the centrifugal force generated by the orbital motion of the orbiting parts, and a centre of said drive pin is located on an opposite side to a centre of said drive shaft with regard to a straight line which passes through the centre of said linkage portion and is perpendicular to a connecting line passing through the centre of said shaft and the centre of said linkage portion, whereby the contact force between said first and second wrap means is generated only by the moment created by the positional relationship of said drive shaft, said drive pin and said linkage portion.

One embodiment of the invention is an orbiting piston type fluid displacement apparatus which includes a housing having a fluid inlet port and a fluid outlet port. A fixed member is fixedly disposed relative to the housing and has a first piston element extending into the interior of the housing. An orbiting piston member has a second piston element. The first and second piston elements interfit to make a plurality of line contacts to define at least one sealed off fluid pocket. A drive shaft is rotatably supported by the housing and is provided with a drive pin which is connected to the orbiting piston member for transmitting orbital motion to the orbiting piston member. A rotation preventing means is disposed in the housing for preventing the rotation of the orbiting piston member during the orbital motion of the orbiting piston member. Therefore, the fluid pocket changes volume due to the orbital motion of the orbiting piston member. The orbiting piston member has a boss. A bushing is rotatably supported in the boss. An eccentric hole is formed in an end surface of the bushing. The drive pin is inserted in the eccentric hole. The bushing is thereby rotatably supported by the drive pin. A center of the drive pin is located on an opposite side to a center of the drive shaft with regard to a straight line, which passes through the center of the bushing and is perpendicular to a connecting line passing through the center of the drive shaft and the center of the bushing. The bushing has a balanceweight for cancelling the centrifugal force which arises by the orbiting motion of the orbiting parts. The balanceweight is formed separately from the bushing and is fixed to an axial end surface of the bushing by a plurality of rivets.

The rivets project from the end surface of the balanceweight and the axial end surface of drive shaft is formed with indentations for receiving the rivets to thereby restrict the turning angle scope of the bushing around the drive pin.

The following description relates to a scroll type compressor for the sake of convenience, but the invention is not limited to scroll type compressors.

The invention will now be described, by way of example, with reference to the accompanying drawings, in which:—

Fig. 1 is a vertical view of a compressor according to one embodiment of this invention;

Fig. 2 is an exploded perspective view of a driving mechanism in the embodiment of Fig. 1;

Fig. 3 is a sectional view taken generally along line 3—3 of Fig. 1 with an explanatory diagram of the motion of the eccentric bushing;

Fig. 4 is an exploded perspective view of a rotation preventing mechanism in the embodiment of Fig. 1;

Fig. 5 is a front view and a vertical sectional view of the bushing and balance weight according to one embodiment of this invention;

Fig. 6 is a side view and front view of the drive shaft according to one embodiment of this invention;

Fig. 7 is a front view of the bushing and balance weight according to another embodiment of this invention; and

Fig. 8 is a diagrammatic sectional view illustrating the spiral elements of the fixed and orbiting scroll members.

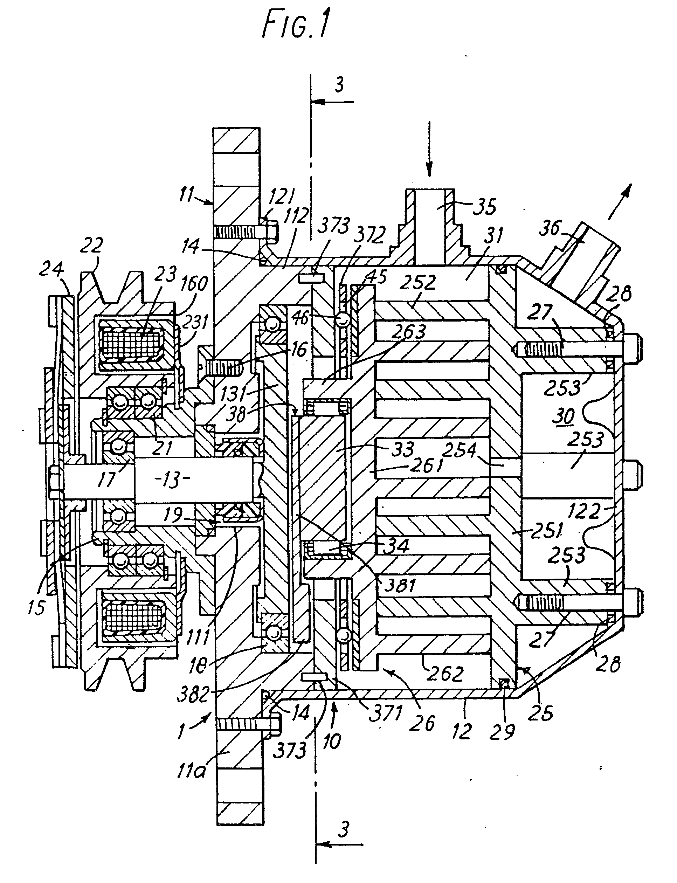

Referring to Fig. 1, a fluid displacement apparatus in accordance with an embodiment of the present invention, in particular, a scroll type refrigerant compressor 1 is shown. The compressor 1 includes a compressor housing 10 comprising a front end plate 11, and a cup shaped casing 12 which is disposed at an end surface of front end plate 11. An opening 111 is formed in the center of front end plate 11 for penetration or passage of a drive shaft 13. An annular projection 112 is formed in a rear end surface of front end plate 11 which faces cup shaped casing 12. The annular projection 112 is concentric with opening 111. Cup shaped casing 12 has a flange portion 121 which extends radially outwards along an opening portion thereof. An inner surface of the opening portion of cup shaped casing 12 is fitted about an outer peripheral surface of annular projection 112. An end surface of flange portion 121 is fitted against the rear end surface of front end plate 11 and is fixed to front end plate 11 by a fastening means, for exmaple, a plurality of bolts and nuts. The opening portion of cup shaped casing 12 is thereby covered by front end plate 11. A sealing member, such as an O-ring 14, is placed between front end plate 11 and cup shaped casing 12, to thereby form a seal along the mating surfaces of front end plate 11 and cup shaped casing 12. Front end plate 11 has an annular sleeve portion 15 projecting from the front end surface thereof for surrounding drive shaft 13. In the embodiment as shown in Fig. 1, sleeve portion 15 is formed separately from front end plate 11. Therefore, sleeve portion 15 is fixed to the front end plate 11 by screws 16, one of which is shown in Fig. 1. Alternatively, sleeve portion 15 may be formed integral with front end plate 11.

Drive shaft 13 is rotatably supported by sleeve portion 15 through a bearing 17 disposed within the front end portion of sleeve portion 15. Drive shaft 13 is formed with a disc rotor 131 at its inner end portion, and disk rotor 131 is rotatably supported by front end plate 11 through a bearing 18 disposed within an inner peripheral surface of annular projection 112. Therefore, drive shaft 13 is rotatably supported by the two bearings 17, 18. A shaft seal assembly 19 is assembled on drive shaft 13 within opening 111 of front end plate 11.

A pulley 22 is rotatably supported by a bearing 21 which is disposed on an outer peripheral surface of sleeve portion 15. An electromagnetic annular coil 23 is fixed to the outer surface of sleeve portion 15 by a support plate 231 and is received in an annular cavity of pulley 22. An armature plate 24 is elastically supported on the outer end of drive shaft 13 which extends from sleeve portion 15. A magnetic clutch comprising pulley 22, magnetic coil 23 and armature plate 24 is thereby formed. Thus, drive shaft 13 is driven by an external power source, for example, an engine of a vehicle, through a torque transmitting mechanism, such as the magnetic clutch.

A fixed scroll member 25, an orbiting scroll member 26, a driving mechanism for orbiting scroll member 26, and a rotation preventing/ thrust bearing mechanism for orbiting scroll member 26 are disposed in an inner chamber of cup shaped casing 12. The inner chamber is formed between the inner wall of cup shaped casing 12 and front end plate 11.

Fixed scroll member 25 includes a circular end plate 251, a wrap or spiral element 252 affixed to or extending from one side surface of circular plate 251, and a plurality of internally threaded bosses 253 axially projecting from the end surface of circular plate 251 opposite to the side thereof from which spiral element 252 extends. An axial end surface of each boss 253 is seated on the inner surface of an end plate portion 122 of cup shaped casing 12 and is fixed to end plate portion 122 by screws 27 which screw into boss 253 from the outside of end plate portion 122. First seal members 28 are disposed between the end surface of each boss 253 and the inner surface of end plate portion 122, to thereby prevent fluid leakage along screws 27. Circular plate 251 of fixed scroll member 25 partitions the inner chamber of cup shaped casing 12 into a rear or discharge chamber 30 in which bosses 253 are disposed and a front or suction chamber 31 in which spiral element 252 of fixed scroll member 25 is disposed. A second sealing means 29 is placed between the outer peripheral surface of circular plate 251 and the inner surface of cup shaped casing 12 to prevent leakage along the mating surfaces of the plate 251 and the casing 12.

Orbiting scroll member 26 is disposed in front chamber 31. Orbiting scroll member 26 also comprises a circular end plate 261 and a wrap or spiral element 262 extending from one side surface of circular plate 261. Spiral elements 252, 262 interfit at an angular offset of 180° and a predetermined radial offset. At least one pair of fluid pockets is thereby defined between spiral elements 252, 262. Orbiting scroll member 26 is connected to the driving mechanism and the rotation preventing/thrust bearing mechanism. These last two mechanisms effect orbital motion of orbiting scroll member 26 at a circular radius $R_o$ upon rotation of drive shaft 13, to thereby compress fluid passing through the compressor.

Generally, the radius $R_o$ of orbital motion is given by

[(pitch of spiral element) −
　　2(wall thickness of spiral element)] × 1/2

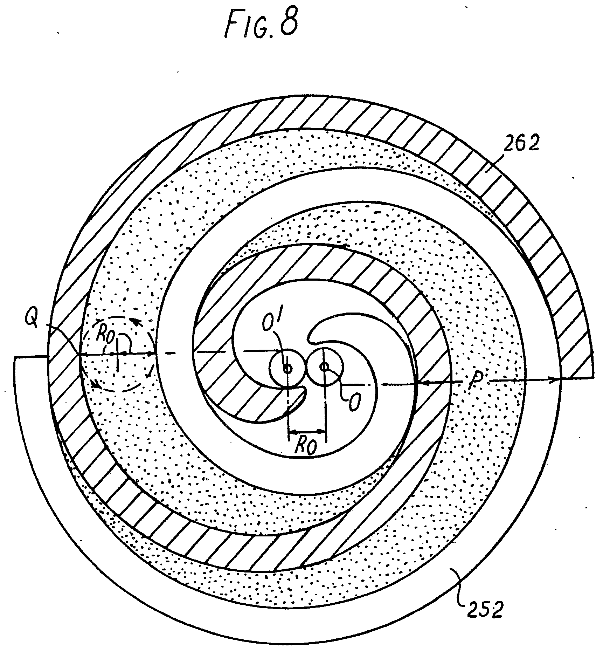

As seen in Fig. 8, the pitch (P) of the spiral elements can be defined by $2\pi rg$, where rg is the involute generating circle radius. The radius of orbital motion $R_o$ is also illustrated in Fig. 8 as a locus of an arbitrary point Q on orbiting scroll 26. The spiral element 262 is placed radially offset from the spiral element 252 of fixed scroll member 25 by the distance $R_o$. Thereby, orbiting scroll member 26 is allowed to undergo orbital motion with a radius $R_o$ upon rotation of the drive shaft 13. As the orbiting scroll member 26 orbits, line contact between both spiral elements 252, 262 shifts to the center of the spiral element along the surfaces of spiral elements. Fluid pockets defined between the spiral elements 252, 262 move to the center with a consequent reduction of volume, to thereby compress the fluid in the fluid pockets. Therefore, fluid or refrigerant gas, introduced into front chamber 31 from an external fluid circuit through an inlet port 35, is taken into the fluid pockets formed between the spiral elements 252, 262 from outer end portion of the spiral elements. As orbiting scroll member 26 orbits, fluid in the fluid pockets is compressed, and the compressed fluid is discharged into rear chamber 30 from the fluid pocket adjacent the center of the spiral elements through a hole 254 which is formed through circular plate 251 at a position near the center of spiral element 252. The compressed fluid is thereafter discharged to the external fluid circuit through an outlet port 36.

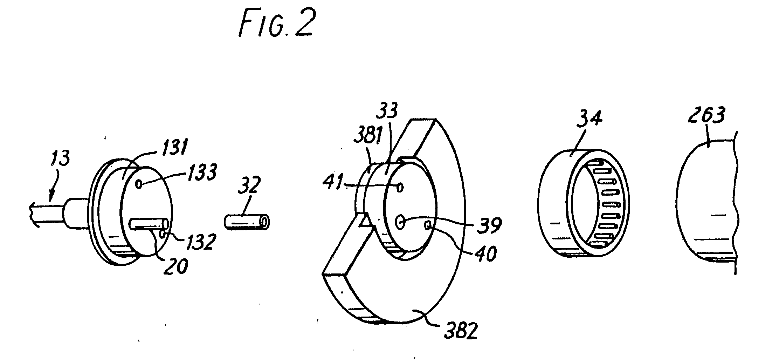

Referring to Fig. 1 and 2, the driving mechanism for orbiting scroll member 26 will be described. Drive shaft 13, which is rotatably supported by sleeve portion 15 through bearing 17, is formed with disc rotor 131. Disc rotor 131 is also rotatably supported by front end plate 11 through bearing 18. A crank pin or drive pin 20 projects axially from an axial end surface of disc rotor 131 and is radially offset from the center of drive shaft 13. Circular plate 261 of orbiting scroll member 26 is provided with a tubular boss 263 axially projecting from an end surface opposite to the side thereof from which spiral element 262 extends. A linkage portion or short axial bushing 33 is fitted into boss 263, and is rotatably supported therein by a bearing, such as a needle bearing 34.

A balance or counterweight 38 is attached to an axial end surface of bushing 33. The balance weight is formed of an attachment portion 381 for attachment to the bushing 33 and a ring shaped balance weight portion 382 which extends radially outwardly from a portion of the periphery of attachment portion 381. The attachment portion 381 is circular and has the same radius as the bushing 33. An eccentric hole 39 is formed through the bushing 33 and the attachment portion 381 of the balanceweight 38, the hole being radially offset from the center of bushing 33. Drive pin 20 is fitted into the eccentric hole 39, within which a bearing 32 is disposed. Bushing 33 is therefore driven by the rotation of drive pin 20 and is permitted to rotate about bearing 32.

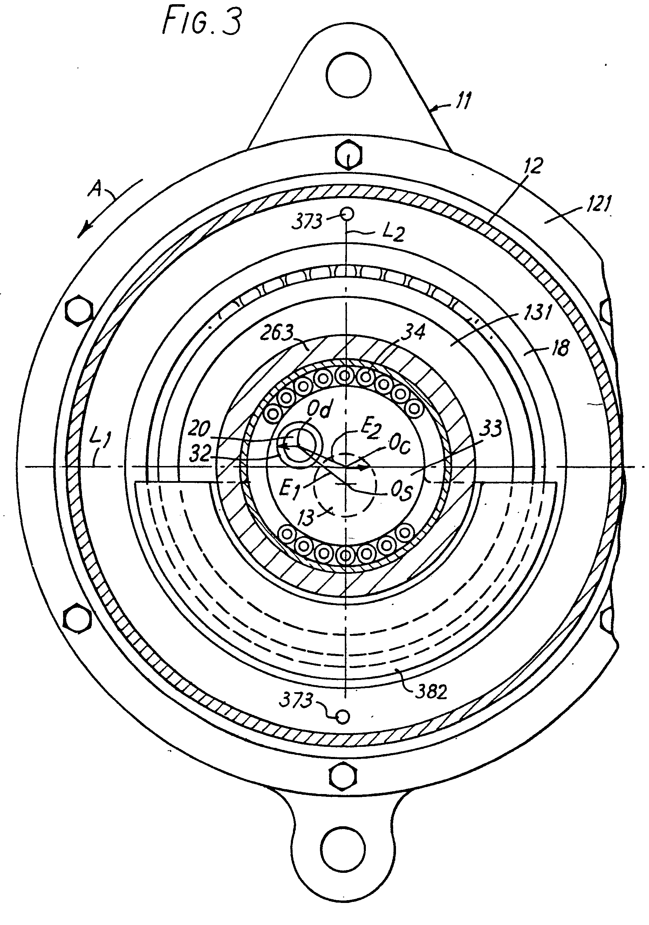

The relative positions of the center $O_s$ of drive shaft 13, the center $O_c$ of bushing 33, and the center $O_d$ of hole 39, and thus of drive pin 20, are shown in Fig. 3. In the position shown in Fig. 3, the distance between $O_s$ and $O_c$ is the radius $R_o$ of orbital motion. When the drive pin 20 is placed in the eccentric hole 39, the center $O_d$ of the drive pin 20 is located, with respect to $O_s$, on the opposite side of a line L1, which passes through $O_c$ and is perpendicular to a line L2 through $O_c$ and $O_s$.

In this construction of the driving mechanism, the center $O_c$ of bushing 33 is permitted to swing about the center $O_d$ of drive pin 20 at a radius E2, as shown in Fig. 3. When the drive shaft 13 rotates, a drive force is exerted on center $O_d$ in a direction to the left, as viewed in Fig. 3, and a reaction force due to gas compression appears at the center $O_c$, in a direction to the right as viewed in Fig. 3, both forces being parallel to the line L1. Therefore, the arm $O_d$-$O_c$ swings outwardly as a result of the moment generated by the two forces. Spiral element 262 of orbiting scroll member 26 is thereby forced toward spiral element 252 of fixed scroll member 25, and the center of orbiting scroll member 26 orbits with the radius $R_o$ around the center $O_s$ of drive shaft 13. The rotation of orbiting scroll member 26 is prevented by a rotation preventing/thrust bearing mechanism, described more fully hereinafter, whereby orbiting scroll member 26 only orbits and does not rotate. The fluid pocket moves because of the orbital motion of orbiting scroll member 26, to thereby compress the fluid.

When fluid is compressed by orbital motion of orbiting scroll member 26, a reaction force, caused by the compression of the fluid acts on spiral element 262. The reaction force gives rise to a force which acts at the line contact between the spiral elements 252, 262 to urge spiral element 262 into engagement with spiral element 252, whereby a seal of the fluid pockets is attained. In addition, the center $O_c$ of bushing 33 is rotatable around center $O_d$ of drive pin 20. Accordingly, if the pitch of a spiral element or the wall thickness of a spiral element has a dimensional error, due to a manufacturing inaccuracy or wear, the distance $O_c$-$O_s$ changes by an amount to correspond to the error. Orbiting scroll member 26 thereby moves smoothly along the line contacts between the spiral elements.

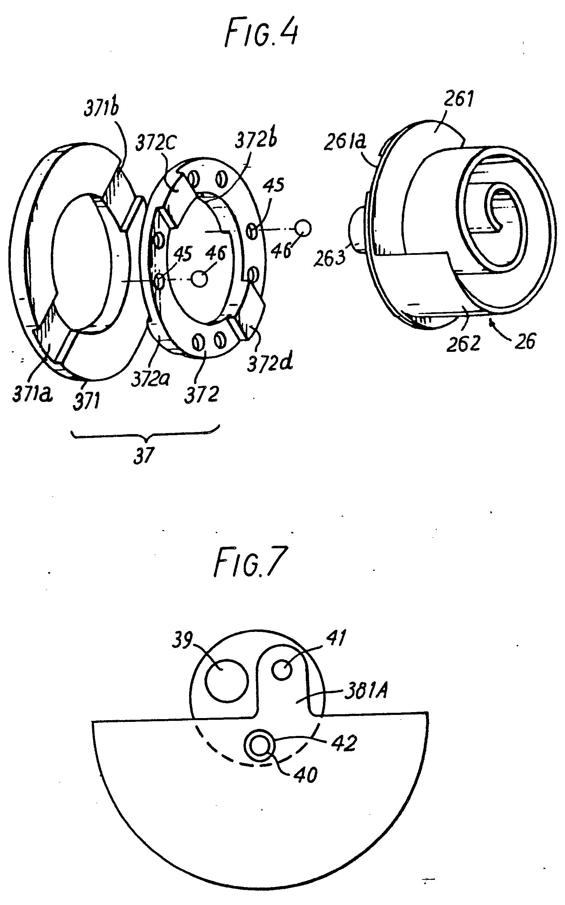

Referring to Fig. 4 and Fig. 1, a rotation preventing mechanism 37, which is formed integral with a thrust bearing mechanism, will be described. Rotation preventing/thrust bearing mechanism 37 is disposed around boss 263 and is comprised of a fixed ring 371 and an Oldham ring 372. Fixed ring 371 is secured to the axial end surface of annular projection 112 of front end plate 11 by a pin 373. Fixed ring 371 is provided with a pair of keyways 371a, 371b in an axial end surface facing orbiting scroll member 26. Oldham ring 372 is disposed in a hollow space between fixed ring 371 and the circular plate 261 of orbiting scroll member 26. Oldham ring 372 is provided with a pair of keys 372a, 372b on the surface facing fixed ring 371, which are received in keyways 371a, 371b. Therefore, Oldham ring 372 is slidable in the radial direction by the guiding of keys 372a, 372b within keyways 371a, 371b. Oldham ring 372 is also provided with a pair of keys 372c, 372d on its opposite surface. Keys 372c, 372d are arranged along a diameter perpendicular to the diameter along which keys 372a, 372b are arranged. Circular plate 261 or orbiting scroll member 26 is provided with a pair of keyways (in Fig. 4 only one keyway 261a is shown; the other keyway is disposed diametrically opposite to keyway 261a) in the surface facing Oldham ring 372, in which are received keys 372c, 372d. The keyways in circular plate 261 are located outside the diameter of boss 263. Therefore, orbiting scroll member 26 is slidable in a radial direction by the guiding of keys 372c, 372d within the keyways of circular plate 261.

Accordingly, orbiting scroll member 26 is slidable in a first radial direction with Oldham ring 372, and is independently slidable in another radial direction which is perpendicular to the first radial direction. Therefore, orbiting scroll member 26 is prevented from rotation, but is permitted to move in two radial directions perpendicular to one another.

In addition, Oldham ring 372 is provided with a plurality of equiangularly spaced holes 45, which are formed in an axial direction. Bearings, such as balls 46, each having a diameter which is greater than the thickness of Oldham ring 372, are retained in holes 45. Balls 46 contact and roll on the surface of fixed ring 371 and circular plate 261. Therefore, the axial thrust load from orbiting scroll member 26 is supported on fixed ring 371 through bearings 46.

In this construction, if bushing 33 is not provided with balance weight 38, a centrifugal force $F_1$ caused by orbiting motion of orbiting scroll member 26, bearing 34 and bushing 33 is added to the force of spiral element 262 acting on spiral element 252 of fixed scroll member 25. Therefore, the contact force between the spiral elements 252, 262 would also be increased. Frictional forces between spiral elements 252, 262 would thereby be increased, and the wearing of both spiral elements would be increased.

Therefore, if bushing 33 is provided with balance weight 38, the centrifugal force F1 can be cancelled by a centrifugal force F2 due to the balance weight. The mass of the balance weight 38 is selected so that the centrifugal force F1 is equal in magnitude to the centrifugal force F2 and is located so that the centrifugal forces F1 and F2 are opposite in direction. Wear of both spiral elements is thereby also decreased; the sealing force of fluid pockets will be attained by the contact between the spiral elements and the orbiting scroll member will move smoothly.

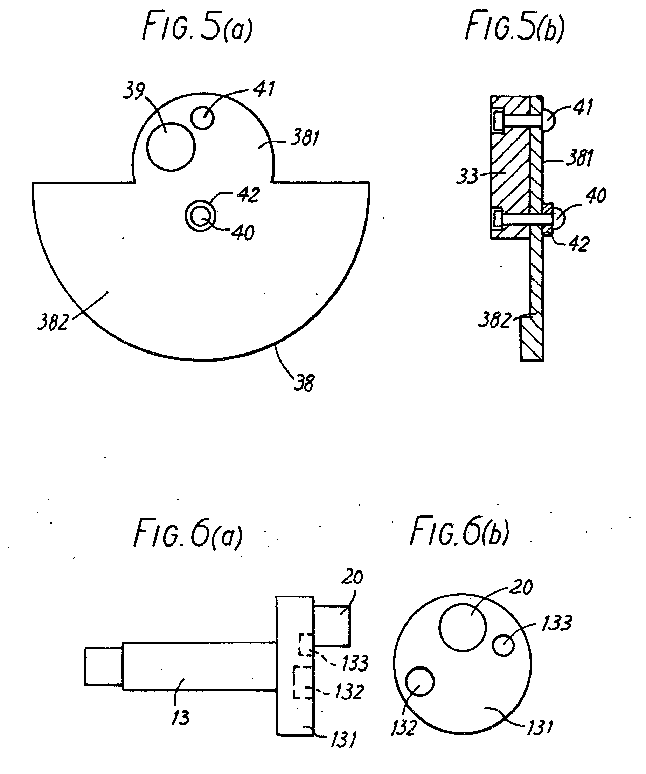

As shown in Fig. 5, the balance weight is formed separately from bushing 33. The attachment portion 381 of balance weight 38 is fixed to the axial end surface of bushing 33 by at least two rivets 40, 41. As described above, the attachment portion 381 is circular and has a radius equal to the radius of the bushing 33. The attachment portion 381 is therefore formed with a hole through which the drive pin 20 passes. However, the shape of the attachment portion 381 does not necessarily correspond to the shape of the bushing 33. Instead, the portion 381 may be formed of an extending part 381a of reduced dimensions so as to reduce the weight of the driving mechanism, as shown in Fig. 7. In this construction, the head of rivets 40, 41 project axially from the end surface of balance weight 38. Therefore, indentations 132, 133 are formed in the axial end surface of disc rotor 131 for receiving the head of rivets 40, 41, there being a clearance between the inner surface of each indentation and the associated rivet, as shown in Fig. 6. This two-piece construction of the balance weight 38 and bushing 33 allows the balance weight 38 and the bushing 33 to be made of different materials, while keeping the production technique simple. For example, the bushing 33 can be made of an anti-wear material because it must rotate within the needle bearing, while the balance weight 38 can be made of another less expensive material.

Bushing 33 is freely rotatable on drive pin 20, so that bushing 33 is movable vertically, but if bushing 33 were fully rotatable around drive pin 20, the balance weight would interfere with interior wall of the housing. Therefore, a mechanism is provided to limit the swing angle of bushing 33 around drive pin 20.

One of the rivets 40 secures an annular steel ring 42 together with balance weight 38 to the bushing 33, as shown in Fig. 5. Steel ring 42 is disposed in the indentation 132 of disc rotor 131 with a selected amount of clearance to permit only a predetermined swing of the bushing 33 and the balance weight 38 about the drive pin 20. Therefore, the swing angle of bushing 33 around drive pin 20 is limited by the steel ring 42 disposed in indentation 132. The steel ring 42 has a generally flat outer circumferential surface and the indentation 132 has a generally flat inwardly facing circumferential surface. The flat surfaces preclude slippage of the ring 42 out of the indentation 132.

**Claims**

1. A scroll-type fluid displacement apparatus including a housing (10), a fixed scroll member (25) fixedly disposed within said housing (10) and having first wrap means (252), an orbiting scroll member (26) having an end plate means (261) from which second wrap means (262) extend, said first and second wrap means (252, 262) interfitting at an angular offset to make a plurality of line contacts to define at least one pair of sealed off fluid pockets, a driving mechanism which is operatively connected to said orbiting scroll member (26) to effect the orbital motion of the orbiting scroll member (26), the driving means including a drive shaft (13) rotatably supported by said housing (10), a drive pin (20) eccentrically disposed with respect to the axis of the drive shaft (13) at an inner end of said drive shaft, an extension (263) extending from a side of said end plate (261) opposite to a side surface from which said second wrap means (262) extends, and a member having a linkage portion (33) operatively connected to said extension (263) and a counterweight portion (38), said linkage portion (33) having an eccentric hole (39) for rotatably receiving said drive pin (20), and a rotation preventing means (37) for preventing the rotation of said orbiting scroll member (26) during the orbital motion of said orbiting scroll member, whereby said fluid pockets change volume by the orbital motion of said orbiting scroll member (26), characterised in that said counterweight portion (38) is made of a single body separate from said linkage portion (33), the counterweight portion (38) is formed of an attachment portion (381) for attachment to said separate linkage portion (33) and a balance weight portion (382), said counterweight portion (38) is attached at said attachment portion (381) to said linkage portion (33) by fastening means (40, 41), said balance weight portion (382) has a mass for generating a centrifugal force of a magnitude to fully cancel the centrifugal force generated by the orbital motion of the orbiting parts (26, 33, 34), and a centre of said drive pin (20) is located on an opposite side to a centre of said drive shaft (13) with regard to a straight line which passes through the centre of said linkage portion (33) and is perpendicular to a connecting line passing through the centre of said shaft (13) and the centre of said linkage portion (33), whereby the contact force between said first and second wrap means (252, 262) is generated only by the moment created by the positional relationship of said drive shaft (13), said drive pin (20) and said linkage portion (33).

2. A scroll type fluid displacement apparatus as claimed in claim 1, wherein means is provided for limiting an angular extent over which said linkage portion (33) and said counterweight portion (38) can swing about the axis of said drive pin (20), and said limiting means comprises a portion of said fastening means (40, 41) extending from an end surface of said attachment portion (381) of said counterweight portion (38) and an indentation (132, 133) formed in an end surface of said drive shaft (13), said portion of said fastening means (40, 41) is received in said indentation (132, 133) with a selected amount of clearance sufficient to permit a predetermined amount of swing of said bushing (33) and counterweight portion (38) about the axis of said drive pin (20).

3. A scroll type fluid displacement apparatus as claimed in claim 2, wherein said portion of said fastening means (40, 41) includes a disc or ring member (420) for contacting an inner circumferential surface of said indentation (132).

**Patentansprüche**

1. Fluidverdrängeranlage vom Spiraltyp mit einem Gehäuse (10), einem festen Spiralteil (25), das fest innerhalb des Gehäuses (10) angebracht ist une eine erste Spiraleinrichtung (252) aufweist, einem umlaufenden Spiralteil (26) mit einer Endplatteneinrichtung (261), von der sich eine zweite Spiraleinrichtung (262) erstreckt, wobei die erste und zweite Spiraleinrichtung (252, 262) mit einer winkelmäßigen Verschiebung ineinandergreifen und dabei eine Mehrzahl von Linienkontakten bilden, damit mindestens ein Paar von abgeschlossenen Fluidtaschen gebildet wird, einem Antriebsmechanismus, der bedienungsgemäß zum Erzeugen der umlaufenden Bewegung des umlaufenden Spiralteiles (26) mit dem umlaufenden Spiralteil (26) verbunden ist, wobei die Antriebseinrichtung eine drehbar von dem Gehäuse (10) getragene Antriebswelle (13), einen exzentrisch im Verhältnis zur Achse der Antriebswelle (13) an einem inneren Ende der Antriebswelle angebrachten Mitnehmerstift (20), einen sich von einer Seite der Endplatte (261) entgegengesetzt von einer Seitenoberfläche, von der sich die zweite Spiraleinrichtung (262) erstreckt, erstreckenden Ansatz (263) und ein bedienungsgemäß mit dem Ansatz (263) und einem Gegengewichtsbereich (38) verbundenen Verbindungsbereich (33) aufweist, wobei der Verbindungsbereich (33) zum drehbaren Aufnehmen des Mitnehmerstiftes (20) ein exzentrisches Loch (39) aufweist, und einer Rotationsverhinderungseinrichtung (37) zum Verhindern der Rotation des umlaufenden Spiralteiles (26) während der umlaufenden Bewegung des umlaufenden Spiralteiles, wodurch die Fluidtaschen ihr Volumen während der umlaufenden Bewegung des umlaufenden Spiralteiles (26) verändern, dadurch gekennzeichnet, daß der Gegengewichtsbereich (38) aus einem einzelnen, von dem Verbindungsbereich (33) getrennten Körper hergestellt ist, der Gegengewichtsbereich (38) aus einem Ansatzstück (381) zum Ansetzen an den getrennten Verbindungsbereich (33) und einem Ausgleichsgewichtsteil (382) gebildet ist, der Gegengewichtsbereich (38) an dem Ansatzstück (381) zu dem Verbindungsbereich (33) durch eine Befestigungseinrichtung (40, 41) angebracht ist, der Ausgleichsgewichtsteil (382) eine Masse zum Erzeugen einer Zentrifugalkraft von einer Stärke aufweist, die die von der umlaufenden Bewegung der umlaufenden Teile (26, 33, 34) erzeugte Zentrifugalkraft voll ausgleicht, und ein Zentrum des Mitnehmerstiftes (20) auf einer entgegengesetzten Seite von einem Zentrum der Antriebswelle (13), bezogen auf eine gerade Linie, die durch das Zentrum des Verbindungsbereiches (33) geht und senkrecht zu einer durch das Zentrum der Welle (13) und das Zentrum des Verbindungsbereiches (33) gehenden Verbindungslinie steht, angeordnet ist, wodurch die Berührungskraft zwischen dem ersten und zweiten Spiralelement (252, 262) nur durch das Beharrungsvermögen erzeugt wird, welches durch das Lageverhältnis der Antriebswelle (13), des Mitnehmerstiftes (20) und des Verbindungsbereiches (33) erzeugt wird.

2. Fluidverdrängeranlage vom Spiraltyp nach Anspruch 1, in der eine Vorrichtung zum Begrenzen des Winkelbereiches vorgesehen ist, über den der Verbindungsbereich (33) und der Gegengewichtsbereich (38) um die Achse des Mitnehmerstiftes (20) schwenken kann, und die Begrenzungsvorrichtung einen sich von einer Endoberfläche des Ansatzstückes (381) des Gegengewichtsbereiches (38) erstreckenden Teil der Befestigungseinrichtung (40, 41) und eine in einer Endoberfläche der Antriebswelle (13) gebildete Einsenkung (132, 133) aufweist, der Teil der Befestigungseinrichtung (40, 41) in der Einsenkungseinrichtung (132, 133) mit einem ausgewählten Maß an Freiraum aufgenommen wird, damit ein vorbestimmtes Maß des Schwenkens der Buchse (33) und des Gegengewichtsbereiches (38) um die Achse des Mitnehmerstiftes (20) ermöglicht wird.

3. Fluidverdrängeranlage vom Spiraltyp nach Anspruch 2, in der der Teil der Befestigungseinrichtung (40, 41) einen Scheiben- oder Ringteil (420) zum Berühren einer inneren, kreisförmig umlaufenden Oberfläche der Einsenkung (132) aufweist.

**Revendications**

1. Appareil à déplacement de fluide de type à volutes imbriquées, comprenant un carter (10), un élément de volute fixe (25) monté de façon fixe dans ce carter (10) et comportant des premiers moyens d'enroulement (252), un élément de volute orbitale (26) comportant des moyens de plaque d'extrémité (261) d'où partent des seconds moyens d'enroulement (262), ces premiers et seconds moyens d'enroulement (252, 262) s'emboîtant avec un décalage angulaire pour former un certain nombre de lignes de contact destinées à définir au moins une paire de poches à fluide étanches, un mécanisme d'entraînement relié en fonctionnement à l'élément de volute orbitale (26) pour produire le mouvement orbital de l'élément de volute orbitale (26), les moyens d'entraînement comprenant un arbre d'entraînement (13) supporté en rotation par le carter (10), une tige d'entraînement (20) placée excentriquement par rapport à l'axe de l'arbre d'entraînement (13) à une extrémité intérieure de l'arbre d'entraînement, une extension (263) faisant saillie sur la face latérale de la plaque d'extrémité (261) opposée à la face latérale d'où partent les seconds moyens d'enroulement (262), et un élément muni d'une partie de liaison (33) reliée en fonctionnement à l'extension (263), et d'une partie de contrepoids (38), cette partie de liaison (33) comportant un trou excentrique (39) destiné à recevoir en rotation la tige d'entraînement (20), et des moyens anti-rotation (37) destinés à empêcher la rotation de l'élément de volute orbitale (26) pendant le mouvement orbital de cet élément de volute orbitale, ce qui permet aux poches à fluide de changer de volume sous l'effet du mouvement orbital de l'élément de volute orbitale (26), appareil caractérisé en ce que la partie de contrepoids (38) est constituée par un corps unique séparé de la partie de liaison (33), en ce que la partie de contrepoids (38) est formée d'une partie de fixation (381) destinée à se relier à la partie de liaison séparée (33), et d'une partie de poids d'équilibrage (382), en ce que la partie de contrepoids (38) est fixée à la partie de fixation (381) de la partie de liaison (33) par des moyens de fixation (40, 41), en ce que la partie de poids d'équilibrage (382) présente une masse destinée à produire une force centrifuge dont l'amplitude permet d'annuler complètement la force centrifuge produite par le mouvement orbital des parties orbitales (26, 33, 34), et en ce que le centre de la tige d'entraînement (20) est placé du côté opposé au centre de l'arbre d'entraînement (13) par rapport à une droite passant par le centre de la partie de liaison (33), perpendiculairement à une droite de liaison passant par le centre de l'arbre (13) et le centre de la partie de liaison (33), de sorte que la force de contact entre les premier et second moyens d'enroulement (252, 262) n'est produite que par le moment créé par la relation de position entre l'arbre d'entraînement (13), la tige d'entraînement (20) et la partie de liaison (33).

2. Appareil à déplacement de fluide de type à volutes imbriquées selon la revendication 1, caractérisé en ce que des moyens sont utilisés pour limiter l'amplitude angulaire avec laquelle la partie de liaison (33) et la partie de contrepoids (38) peuvent basculer autour de l'axe de la tige d'entraînement (20), et en ce que ces moyens de limitation constituent une partie des moyens de fixation (40, 41) compris entre une face d'extrémité de la partie de fixation (381) de la partie de contrepoids (38) et une encoche (132, 133) formée dans une face d'extrémité de l'arbre d'entraînement (13), cette partie des moyens de fixation (40, 41) venant se loger dans l'encoche (132, 133) avec un jeu de valeur déterminée suffisante pour permettre une amplitude de balancement prédéterminée du coussinet (33) et de la partie de contrepoids (38) autour de l'axe de la tige d'entraînement (20).

3. Appareil à déplacement de fluide de type à volutes imbriquées selon la revendication 2, caractérisé en ce que cette partie des moyens de fixation (40, 41) comporte un élément de disque ou d'anneau (420) destiné à venir en contact avec la surface périphérique intérieure de l'encoche (132).

FIG.1

FIG.2

FIG. 3

## FIG.4

## FIG.7

## FIG. 5(a)

## FIG. 5(b)

## FIG. 6(a)

## FIG. 6(b)

## FIG. 8